# DEMANDE DE BREVET EUROPEEN

(11) **EP 4 096 343 A1**
(43) Date de publication de la demande: **30.11.2022**
(21) Numéro de dépôt: 22175060.7
(22) Date de dépôt: 24.05.2022
(51) Int. Cl.: H04W 76/16, H04B 7/185, H04W 40/20

(54) **PROCÉDÉ DE ROUTAGE ET DISPOSITIF METTANT EN OEUVRE LEDIT PROCÉDÉ**

(30) Priorité: 28.05.2021 FR 2105586
(71) Demandeur: Airbus SAS, 31700 Blagnac (FR)
(72) Inventeur: RONDEAU, Jean-Loup, 31700 BLAGNAC (FR); FICHOT, Laurent, 31700 BLAGNAC (FR); TRAORE, Albekaye, 31700 BLAGNAC (FR); MEZGHANI, Farouk, 31700 BLAGNAC (FR)
(74) Mandataire: Cabinet Le Guen Maillet

(57) **Abrégé**

Un procédé de routage pour router un flux applicatif de données depuis un dispositif de routage dans un véhicule vers un dispositif destinataire est décrit. Le dispositif de routage a à sa disposition une pluralité de moyens de communication.

Avant un déplacement du véhicule, au moins un paramètre représentatif de la performance est estimé (S 110) le long de l'itinéraire prévu pour chaque moyen de communication. Des règles de routage théoriques (S 120) sont alors définies à partir des paramètres estimés et de besoins applicatifs.

Au cours du déplacement dudit véhicule, au moins un paramètre représentatif de la performance est estimé (S 150) pour chaque moyen de communication.

Le flux applicatif est ensuite routé (S170) en utilisant des règles de routage déterminées en réponse à une comparaison (S 160) entre les paramètres représentatifs de la performance estimés avant déplacement et les paramètres correspondants estimés lors du déplacement.

## Description

### DOMAINE TECHNIQUE

Au moins un mode de réalisation concerne un procédé de routage pour router un flux applicatif de données depuis un dispositif de routage situé dans un véhicule vers un dispositif destinataire, ledit dispositif de routage ayant à sa disposition une pluralité de moyens de communication. Un dispositif de routage mettant en œuvre ledit procédé de routage est également décrit.

### ETAT DE LA TECHNIQUE ANTERIEURE

Nouvelle approche apparue récemment, le SD-WAN (acronyme anglais de « *Software-Defined Wide Area Network* ») applique les principes d'une architecture réseau à définitions logicielles (« *Software defined networking* » en anglais) aux WAN (acronyme anglais de *« Wide Area Network »*)*.*

Dans un réseau SD-WAN, le trafic et la qualité de services sont gérés directement au niveau de l'application (niveau 7 du modèle OSI (acronyme anglais de « Open System Interconnexion »)) en fonction de ses besoins. A cet effet, les flux applicatifs de données sont classés par type d'application. Une fois cette classification effectuée, chaque flux applicatif est routé en fonction de critères de performances dynamiques (e.g. latence, gigue, taux de pertes de paquets...). Le réseau SD-WAN permet ainsi de router les applications les plus critiques ou les plus demandeuses en bande passante selon des règles de routage prédéfinies et ainsi améliorer l'expérience de l'utilisateur. L'ensemble de ces règles de routage prédéfinies forme une politique intelligente de routage (« smart routing policy » en anglais). Ces règles de routage sont généralement figées. Si elles sont adaptées aux réseaux terrestres fixes (« landline network » en anglais), elles ne permettent pas de répondre de manière satisfaisante aux exigences des environnements mobiles.

En effet, dans un environnement mobile de nombreux problèmes liés au déplacement de l'objet lui-même, ainsi qu'à la variabilité des couvertures des moyens de communication, se posent. Ils sont notamment dus aux fortes variations des capacités des moyens de communications, comme par exemple les perturbations des ondes électromagnétiques, ou encore la perte de certains liens de communication (masquage, sortie de la couverture...). Dès lors, l'application de règles de routage figées si elle permet une gestion adéquate d'un réseau SD-WAN terrestre fixe ne permet pas d'assurer un niveau de service attendu dans des situations de mobilité.

Il est souhaitable de pallier ces différents inconvénients de l'état de la technique. Il est notamment souhaitable de proposer un procédé de routage dynamique adapté aux environnements mobiles.

### EXPOSE DE L'INVENTION

Un procédé de routage pour router un flux applicatif de données depuis un dispositif de routage dans un véhicule vers un dispositif destinataire est décrit. Le dispositif de routage a à sa disposition une pluralité de moyens de communication. Le procédé de routage comprend les étapes suivantes mises en œuvre par le dispositif de routage :
- avant un déplacement dudit véhicule :
- obtenir des informations relatives audit déplacement, lesdites informations comprenant au moins un itinéraire prévu pour ledit déplacement et, pour chaque moyen de communication, des informations nécessaires à l'estimation d'au moins un paramètre représentatif de la performance du moyen de communication ;
- estimer, en utilisant un procédé d'apprentissage automatique, le long de l'itinéraire prévu, pour chaque moyen de communication, ledit paramètre représentatif de la performance dudit moyen de communication à partir desdites informations obtenues ;
- définir des règles de routage théoriques à partir du paramètre estimé représentatif de la performance du moyen de communication et de besoins applicatifs ;
- au cours du déplacement dudit véhicule :
- obtenir des informations relatives audit déplacement, lesdites informations comprenant au moins des informations de position du véhicule à un instant t ;
- obtenir, pour chaque moyen de communication, des informations déterminées à des instants antérieurs à l'instant t et nécessaires à l'estimation du paramètre représentatif de la performance à l'instant t du moyen de communication ;
- estimer, en utilisant un procédé d'apprentissage automatique, pour chaque moyen de communication, ledit paramètre représentatif de la performance à l'instant t du moyen de communication à partir des informations obtenues au cours du déplacement ;
- comparer, pour chaque moyen de communication, le paramètre représentatif de la performance du moyen de communication estimé à l'instant t avec sa valeur estimée avant le déplacement ;
- router ledit flux applicatif de données en réponse à ladite comparaison.

Le procédé permet avantageusement d'adapter les règles de routage de manière dynamique en tenant compte des performances de chacun des moyens de communication, performances qui, dans un contexte de mobilité, évoluent au cours du temps, et des besoins applicatifs Selon un mode particulier de réalisation, avant le déplacement du véhicule, lesdites informations nécessaires à l'estimation d'au moins un paramètre représentatif de la performance du moyen de communication comprennent des données cartographiques indiquant le niveau de couverture dudit moyen de communication.

Selon un mode particulier de réalisation, router ledit flux applicatif de données en réponse à ladite comparaison comprend :
- router le flux applicatif de données en utilisant lesdites règles de routage théoriques dans le cas où, pour tous les moyens de communication, tous les paramètres estimés représentatifs de la performance à l'instant t du moyen de communication sont sensiblement égaux à leurs valeurs respectives estimées avant déplacement ;
- sinon, définir de nouvelles règles de routage à partir des paramètres estimés représentatifs de la performance à l'instant t du moyen de communication et des besoins applicatifs et router le flux applicatif de données en utilisant lesdites nouvelles règles de routage.

Selon un mode particulier de réalisation, ledit au moins un paramètre représentatif de la performance dudit moyen de communication appartient à l'ensemble des paramètres comprenant un débit, une latence, un taux de perte de paquets, une gigue.

Selon un mode particulier de réalisation, le dispositif de routage est un dispositif de routage SD-WAN.

Un dispositif de routage dans un véhicule configuré pour router un flux applicatif de données dudit véhicule vers un dispositif destinataire est décrit. Le dispositif de routage a à sa disposition une pluralité de moyens de communication et il comprend au moins un processeur configuré pour :
- avant un déplacement dudit véhicule :
- obtenir des informations relatives audit déplacement, lesdites informations comprenant au moins un itinéraire prévu pour ledit déplacement et, pour chaque moyen de communication, des informations nécessaires à l'estimation d'au moins un paramètre représentatif de la performance du moyen de communication ;
- estimer, en utilisant un procédé d'apprentissage automatique, le long de l'itinéraire prévu, pour chaque moyen de communication, au moins un paramètre représentatif de la performance dudit moyen de communication à partir desdites informations obtenues ;
- définir des règles de routage théoriques à partir du paramètre estimé représentatif de la performance du moyen de communication et de besoins applicatifs ;
- au cours du déplacement dudit véhicule :
- obtenir des informations relatives audit déplacement, lesdites informations comprenant au moins des informations de position du véhicule à un instant t ;
- obtenir, pour chaque moyen de communication, des informations obtenues à des instants antérieurs à l'instant t et nécessaires à l'estimation d'au moins un paramètre représentatif de la performance à l'instant t du moyen de communication ;
- estimer, en utilisant un procédé d'apprentissage automatique, pour chaque moyen de communication, ledit paramètre représentatif de la performance du moyen de communication à l'instant t à partir des informations obtenues au cours du déplacement ;
- comparer, pour chaque moyen de communication, le paramètre représentatif de la performance du moyen de communication estimé à l'instant t avec sa valeur estimée avant le déplacement ;
- router ledit flux applicatif de données en réponse à ladite comparaison.

Selon un mode particulier de réalisation du dispositif de routage, avant le déplacement du véhicule, les informations nécessaires à l'estimation d'au moins un paramètre représentatif de la performance du moyen de communication comprennent des données cartographiques indiquant le niveau de couverture dudit moyen de communication.

Selon un mode particulier de réalisation du dispositif de routage, pour router ledit flux applicatif de données en réponse à ladite comparaison, le processeur est configuré pour :
- router le flux applicatif de données en utilisant lesdites règles de routage théoriques dans le cas où, pour tous les moyens de communication, tous les paramètres estimés représentatifs de la performance à l'instant t du moyen de communication sont sensiblement égaux à leurs valeurs respectives estimées avant déplacement ;
- sinon, définir de nouvelles règles de routage à partir des paramètres estimés représentatifs de la performance à l'instant t du moyen de communication et des besoins applicatifs et router le flux applicatif de données en utilisant lesdites nouvelles règles de routage.

Selon un mode particulier de réalisation du dispositif de routage, ledit au moins un paramètre représentatif de la performance dudit moyen de communication appartient à l'ensemble des paramètres comprenant un débit, une latence, un taux de perte de paquets, une gigue.

Selon un mode particulier de réalisation du dispositif de routage, le dispositif de routage est un dispositif de routage SD-WAN.

Un aéronef comprenant un dispositif de routage selon l'un des modes de réalisation précédents est également décrit.

Un produit programme d'ordinateur est décrit qui comprend des instructions pour mettre en œuvre le procédé de routage selon l'un des modes de réalisation précédents, lorsque ledit programme d'ordinateur est exécuté par un processeur.

Un support de stockage est décrit qui stocke un programme d'ordinateur comprenant des instructions pour mettre en œuvre le procédé de routage selon l'un des modes de réalisation précédents, lorsque ledit programme d'ordinateur est exécuté par un processeur.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre un aéronef équipé d'un dispositif de routage qui se déplace le long d'un itinéraire de vol ;
[Fig. 2A] illustre schématiquement une première partie d'un procédé de routage de flux applicatifs de données selon un mode de réalisation particulier ;
[Fig. 2B] illustre schématiquement une seconde partie du procédé de routage de flux applicatifs de données selon un mode de réalisation particulier ;
[Fig. 3] représente un débit théorique estimé le long de l'itinéraire de vol d'un aéronef ;
[Fig. 4] illustre schématiquement un exemple d'architecture matérielle d'un dispositif de routage selon un mode particulier de réalisation ; et,
[Fig. 5] montre une vue en perspective d'un aéronef qui comprend un dispositif de routage selon un mode particulier de réalisation.

### EXPOSE DETAILLE DE MODES DE REALISATION

L'invention est décrite dans un contexte de mobilité. Dans ce contexte, des flux de données applicatifs doivent être routés depuis un véhicule en mouvement vers une destination. L'invention est plus particulièrement décrite dans le cas où le véhicule est un aéronef. Elle s'applique de manière identique à tout type de véhicule, e.g. un hélicoptère, un bus, une voiture, un train, un bateau, etc.

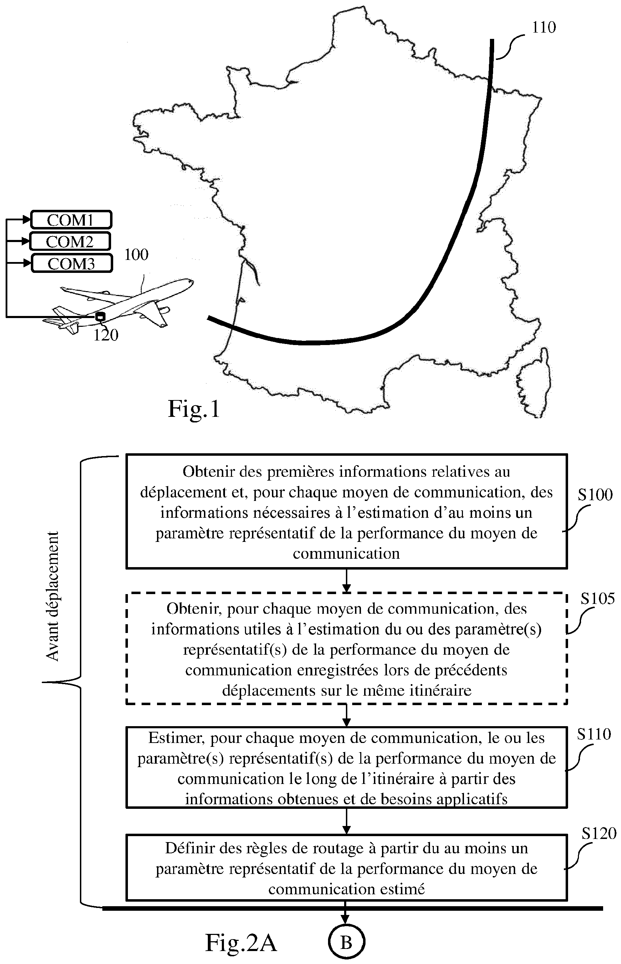

La Fig. 1 illustre un véhicule, en l'occurrence un aéronef 100, qui se déplace le long d'un itinéraire, en l'occurrence un itinéraire de vol 110 (« flight route» en anglais). Dans l'aéronef 100, des passagers ou des membres d'équipage peuvent utiliser différentes applications, telles que des applications de messagerie instantanée, des applications de partage de photos et de vidéos, des applications hébergeant des vidéos et de la musique, des applications de jeux, des applications métier etc. Chacune de ces applications génère un ou des flux de données qu'il faut router à destination. A cet effet, l'aéronef 100 est équipé d'un dispositif de routage 120. Selon une configuration, le dispositif de routage 120 est un élément d'un réseau de type SD-WAN. Il a à sa disposition une pluralité de moyens de communication COMⱼ, j ∈{1,2,... N}, où N est un entier positif supérieur ou égal à 2, pour router chaque flux de données vers sa destination. Par exemple, le dispositif de routage 120 peut router les flux de données en utilisant des moyens de communication 4G, des moyens de communication 5G, des satellites LEO (acronyme anglais de « Low Earth Orbit »), GEO (acronyme anglais de « GEostationary Orbit ») ou encore MEO (acronyme anglais de « Medium Earth Orbit »). Le dispositif de routage 120 est donc configuré pour sélectionner de manière dynamique, pour chaque flux de données, lors d'un vol ou plus généralement lors d'un déplacement du véhicule, le chemin de routage le plus pertinent parmi les chemins offerts par les différents moyens de communication à disposition et ainsi améliorer l'expérience de l'utilisateur et les performances des applications.

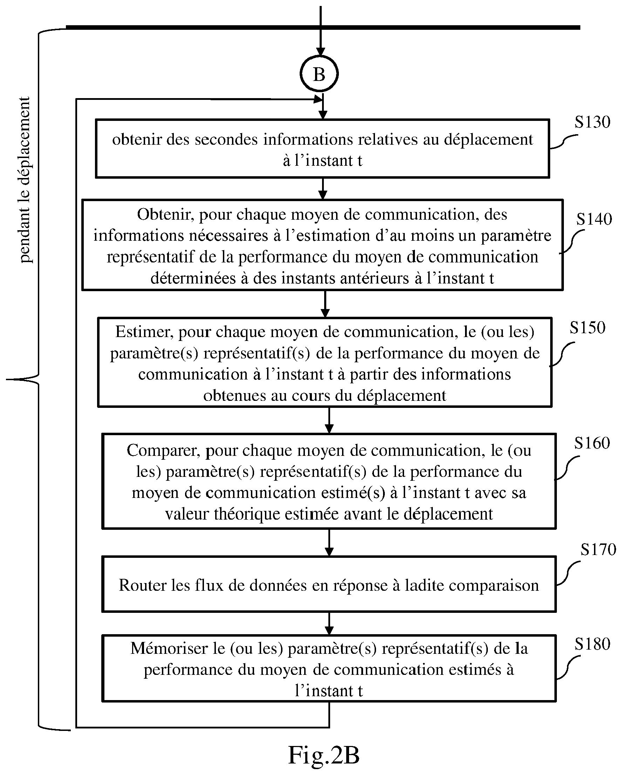

Les **Figs 2A** **et** **2B** illustrent schématiquement un procédé de routage de flux applicatifs de données selon un mode de réalisation particulier. Le procédé de routage est par exemple mis en œuvre par un dispositif de routage, e.g. le dispositif de routage 120, ayant à sa disposition une pluralité de moyens de communication COMⱼ, j ∈{1,2,... N} pour router lesdits flux applicatifs de données.

Lors d'une étape S100, le dispositif de routage 120 obtient, avant le déplacement du véhicule, des premières informations relatives au déplacement, lesdites informations comprenant au moins l'itinéraire 110 prévu du déplacement et, pour chaque moyen de communication à disposition, des informations nécessaires à l'estimation d'au moins un paramètre représentatif de la performance du moyen de communication sur l'itinéraire prévu. Dans un mode de réalisation particulier, le paramètre représentatif de la performance du moyen de communication est un débit. Dans des variantes de réalisation, le paramètre représentatif de la performance du moyen de communication est une latence, une gigue (« jitter » en anglais) ou un taux de pertes de paquets. Dans une autre variante, les informations nécessaires à l'estimation de paramètres représentatifs de la performance du moyen de communication permettent d'estimer une pluralité de paramètres.

Dans le cas particulier d'un aéronef, l'itinéraire est un itinéraire de vol lequel est obtenu à partir d'un plan de vol. Dans le cas d'une voiture ou d'un bus, l'itinéraire peut être obtenu à partir d'une base de données cartographique dans lequel le point de départ, le point d'arrivée et d'éventuelles étapes intermédiaires auront été spécifiés. L'itinéraire est généralement défini comme une succession de positions, chaque position étant définie par une valeur de latitude et une valeur de longitude. Dans le cas de véhicules volants, une valeur d'altitude est utilisée en plus des valeurs de latitude et de longitude pour définir une position.

Pour un moyen de communication donné, les informations nécessaires à l'estimation d'au moins un paramètre représentatif de la performance du moyen de communication comprennent, par exemple, la position dudit moyen de communication, une carte indiquant un niveau de couverture dudit moyen de communication, e.g. la puissance du signal reçu, et/ou un pointage d'une antenne, une bande passante théorique, etc. Par exemple, dans le cas de satellites GEO, il est possible de déterminer un débit sur l'itinéraire prévu à partir de cartes de couverture (« coverage maps » en anglais) desdits satellites. Par exemple, les données cartographiques d'une couverture indiquent pour chaque position (latitude, longitude, altitude) d'une zone terrestre, la valeur du rapport signal à bruit. Pour un moyen de communication donné, les informations nécessaires à l'estimation d'au moins un paramètre représentatif de la performance du moyen de communication combinent des indicateurs de qualité (e.g. des indicateurs de qualité RF (acronyme de « Radio-Fréquence ») ou réseau) et des données cartographiques du moyen de communication.

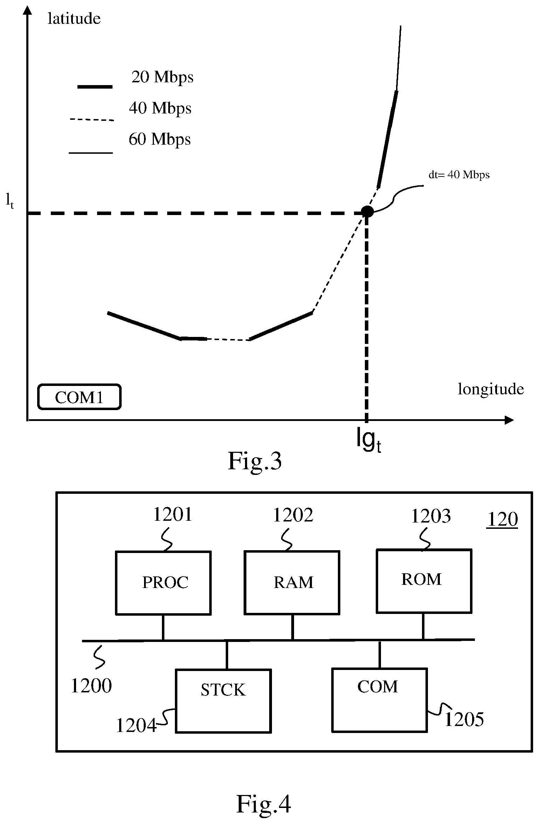

Lors d'une étape S110, pour chaque moyen de communication, le (ou les) paramètre(s) représentatif(s) de la performance du moyen de communication est (sont) estimé(s) le long de l'itinéraire, i.e. notamment à chaque position prévue du véhicule le long de cet itinéraire, à partir des informations obtenues à l'étape S100. A cet effet, un procédé d'apprentissage automatique (« machine learning » en anglais) est avantageusement utilisé. Le procédé d'apprentissage est par exemple basé SVM (acronyme anglais de « Support Vector Machine »), k plus proches voisins, sur un arbre de décision, sur des processus de décision Markoviens. La **Fig. 3** illustre le cas particulier où le paramètre représentatif de la performance du moyen de communication COM1 est un débit. Ainsi, sur la Fig. 3, une valeur de débit est estimée pour chaque position de l'aéronef 100 prévue le long de l'itinéraire de vol. Sur cette figure, il y a 7 segments à chacun desquels est associé un débit de 20, 40 ou 60 Mbps. Ainsi, à chaque position de l'aéronef, i.e. (longitude, latitude, l'altitude n'est pas représentée sur la Fig. 3) correspond une valeur de débit théorique associée au moyen de communication COM1.

Dans une variante de réalisation, lors d'une étape optionnelle S105, des informations utiles à l'estimation du ou des paramètre(s) représentatif(s) de la performance du moyen de communication enregistrées lors de précédents déplacements sur le même itinéraire ou sur des itinéraires proches sont obtenues pour chaque moyen de communication, par exemple elles sont lues dans une base de données DB1. Les informations utiles sont, par exemple, des paramètre(s) représentatif(s) de la performance du moyen de communication enregistrés lors de précédents déplacements sur le même itinéraire, comme par exemple des valeurs de latences, de taux de pertes de paquets, de gigue, des valeurs de rapport signal à bruit, ou bien d'autres paramètres caractéristiques du moyen de communication comme un type de modulation, une mesure de l'effet Doppler (« Doppler shift » en anglais), etc.

Ainsi, dans une variante de réalisation de l'étape S110, pour chaque moyen de communication, le (ou les) paramètre(s) représentatif(s) de la performance du moyen de communication est (sont) estimé(s) sur l'itinéraire, i.e. notamment à chaque position prévue du véhicule sur cet itinéraire, à partir des informations obtenues à l'étape S100 et des informations obtenues à l'étape S105. Les valeurs des paramètres qui sont estimés sont des valeurs dites théoriques dans le sens où elles sont déterminées avant le départ du véhicule. Utiliser ces informations additionnelles permet d'améliorer le procédé d'apprentissage automatique notamment sa précision.

Lors d'une étape S120, le dispositif de routage 120 définit, avant le déplacement, des règles de routage, dites théoriques, à partir du ou des paramètre(s) représentatif(s) de la performance du moyen de communication estimés sur l'itinéraire à l'étape S110 et des besoins de chaque application en lien avec ces paramètres, e.g. de leurs besoins en termes de débit, de latence, de tolérance aux pertes de paquets.

Par exemple, pour chaque portion d'itinéraire, e.g. une portion correspond à un segment tel que défini sur la Fig.3, les flux applicatifs de données transportant de la voix sont routés en utilisant le moyen de communication offrant la latence ou la gigue la plus faible. Les flux applicatifs de données transportant de la vidéo sont routés utilisant le moyen de communication offrant le débit le plus grand. Les flux applicatifs de données transportant des données critiques sont routés utilisant le moyen de communication offrant le taux de perte le plus faible.

Par exemple, ces règles de routage indiquent pour une première portion d'itinéraire, e.g. le premier segment de la Fig.3, que les flux applicatifs de données associés à des applications de messagerie instantanée ou à des applications de partage de photos et de vidéos sont routés en utilisant, de préférence, le premier moyen de communication COM1, les flux de données associés à des applications hébergeant des vidéos sont routés, de préférence, en utilisant le premier moyen de communication COM2 et les flux de données associés à des applications de jeux sont routés, de préférence, en utilisant le premier moyen de communication COM3. Les règles de routage théoriques sont adaptées dynamiquement en fonction des variations le long de l'itinéraire du ou des paramètre(s) représentatif(s) de la performance des moyens de communication. Ces règles de routage incluent la possibilité de bloquer certaines applications pour éviter la création d'un goulot d'étranglement dans le cas où, par exemple, une forte diminution de débit est identifiée.

Cette étape de définition de règles de routage théoriques est effectuée une seule fois avant le départ du véhicule.

Lors d'une étape S130, le dispositif de routage 120 obtient pendant le déplacement du véhicule, des secondes informations relatives audit déplacement à un instant t, lesdites secondes informations comprenant au moins des informations de position à l'instant t, e.g. des coordonnées GPS, du véhicule. Ces informations peuvent également comprendre des informations de vitesse de déplacement du véhicule à l'instant t. Si le véhicule est un aéronef, ces informations peuvent également comprendre des valeurs à l'instant t de lacet (« Yaw » en anglais), de roulis (« Roll » en anglais) et de tangage (« Pitch » en anglais) de l'aéronef. Ces données permettent par exemple de déterminer si l'itinéraire effectivement suivi par le véhicule est identique ou non à l'itinéraire prévu.

Lors d'une étape S140, pour chaque moyen de communication, des informations nécessaires à l'estimation du ou des paramètre(s) représentatif(s) de la performance du moyen de communication sont obtenues, par exemple elles sont lues dans une base de données dans laquelle elles auront été préalablement stockées. Ces informations sont des valeurs du ou des paramètre(s) représentatif(s) de la performance du moyen de communication estimées à des instants antérieurs à l'instant t et enregistrées dans la base de données DB2. Les informations nécessaires à l'estimation du ou des paramètre(s) représentatif(s) de la performance du moyen de communication enregistrées sont par exemple, des valeurs de latences, de taux de pertes de paquets, de gigue, des valeurs de rapport signal à bruit, etc.

Lors d'une étape S150, pour chaque moyen de communication, le (ou les) paramètre(s) représentatif(s) de la performance du moyen de communication est (sont) estimé(s) à l'instant t à partir des informations obtenues aux étapes S130 et S140. A cet effet, un procédé d'apprentissage automatique (« machine learning » en anglais) est avantageusement utilisé. Le procédé d'apprentissage est par exemple basé SVM (acronyme anglais de « Support Vector Machine »), k plus proches voisins, sur un arbre de décision, sur des processus de décision Markoviens. A cet effet le même procédé d'apprentissage automatique que celui qui est utilisé à l'étape S110 est utilisé.

Dans un mode particulier de réalisation, le paramètre représentatif de la performance du moyen de communication COMⱼ est un débit instantané Dt[COMj] estimé à partir des informations obtenues aux étapes S130 et S140.

Lors d'une étape S160, pour chaque moyen de communication COMⱼ, le (ou les) paramètre(s) représentatif(s) de la performance du moyen de communication estimé(s) à l'instant t lors de l'étape S130 est comparé au même paramètre estimé avant le déplacement à l'étape S110.

Dans l'exemple particulier où le paramètre en question est un débit, le débit instantané Dₜ[COMⱼ] estimé à l'instant t est comparé au débit théorique dₜ[COMⱼ] estimé à l'étape S110. Par exemple en référence à la Fig. 3, à l'instant t l'aéronef est à la latitude lt et à la longitude lgt, alors le débit théorique pour le moyen de communication COM1 est dₜ[COM1]=40 Mbps. C'est cette valeur qui est comparée à la valeur Dₜ[COMⱼ].

Lors d'une étape S170, chaque flux de données est routé en réponse aux comparaisons effectuées à l'étape S160. Si, pour tous les moyens de communication COMⱼ, j ∈{1,2,... N}, tous les paramètres (e.g. débit, gigue, latence) représentatifs de la performance à l'instant t du moyen de communication et qui ont été estimés lors de l'étape S130 sont égaux à ε près à leurs valeurs respectives estimées avant déplacement à l'étape S110 (ε étant une valeur de tolérance qui définit un écart autour de la valeur respective estimée avant déplacement, et qui est considérée comme étant négligeable), alors les règles de routage théoriques définies à l'étape S120 sont utilisées pour router les flux applicatifs de données, sinon de nouvelles règles de routage sont définies et ce sont ces nouvelles règles de routage qui sont utilisées pour router les flux applicatifs de données.

Les nouvelles règles de routage sont définies à partir des paramètres estimés représentatifs de la performance à l'instant t du moyen de communication et de besoins applicatifs de chaque application en lien avec ces paramètres, e.g. de leurs besoins en termes de débit, de latence, de tolérance aux pertes de paquets. Ces nouvelles règles de routage sont définies de la même manière que les règles de routage théoriques mais en tenant compte du paramètre ou des paramètres (e.g. débit, gigue, latence, taux d'erreur de paquets) représentatifs de la performance estimée à l'étape S130.

Dans l'exemple particulier où le paramètre en question est un débit, si pour au moins un des moyens COMⱼ, j ∈{1,2,... N}, |Dₜ[COMⱼ] - dₜ[COMⱼ]|≥ε alors de nouvelles règles de routage sont définies. Les nouvelles règles de routage sont utilisées pour router les flux de données provenant des diverses applications.

Sinon, i.e. dans le cas où pour tous les moyens de communication COMⱼ, j ∈{ 1,2,... N}, |Dₜ[COMⱼ] - dₜ[COMⱼ]|<ε alors les règles de routage théoriques définies à l'étape S120 sont utilisées pour router les flux de données provenant des diverses applications.

Lors d'une étape S180, pour chaque moyen de communication COMⱼ, le (ou les) paramètre(s) représentatif(s) de la performance du moyen de communication estimé(s) à l'instant t lors de l'étape S130 sont stockés en mémoire, e.g. dans les bases de données DB1 et DB2. Ces paramètres pourront être utilisés comme données additionnelles lors d'une étape S110 pour de futurs vols sur le même itinéraire. Ils sont également utilisés lors du vol en cours pour estimer à l'étape S150 des paramètres représentatifs de la performance des moyens de communication lors d'instants postérieurs à t.

La **Fig. 4** illustre schématiquement un exemple d'architecture matérielle d'un dispositif de routage 120 selon un mode particulier de réalisation.

Selon l'exemple d'architecture matérielle représenté à la Fig. 4, le dispositif de routage 120 comprend alors, reliés par un bus de communication 1200 : un processeur ou CPU (« Central Processing Unit » en anglais) 1201 ; une mémoire vive RAM (« Random Access Memory » en anglais) 1202 ; une mémoire morte ROM (« Read Only Memory » en anglais) 1203 ; une unité de stockage 1204 telle qu'un disque dur ou telle qu'un lecteur de support de stockage, e.g. un lecteur de cartes SD (« Secure Digital » en anglais); au moins une interface de communication 1205 permettant au dispositif de routage 120 d'envoyer ou de recevoir des informations.

Le processeur 1201 est capable d'exécuter des instructions chargées dans la RAM 1202 à partir de la ROM 1203, d'une mémoire externe (non représentée), d'un support de stockage (tel qu'une carte SD), ou d'un réseau de communication. Lorsque le dispositif de routage 120 est mis sous tension, le processeur 1201 est capable de lire de la RAM 1202 des instructions et de les exécuter. Ces instructions forment un programme d'ordinateur causant la mise en œuvre, par le processeur 1201, de tout ou partie des procédés décrits en relation avec les Figs 2A et 2B.

Le procédé décrit en relation avec les Figs 2A et 2B peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif de routage 120 comprend de la circuiterie électronique configurée pour mettre en œuvre le procédé décrit en relation avec les Figs 2A et 2B.

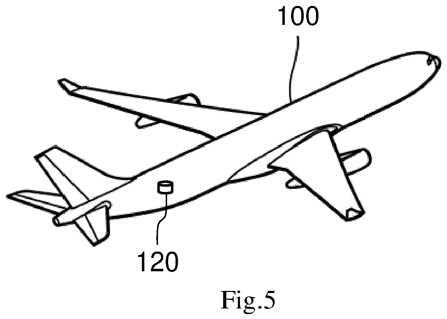

La **Fig. 5** montre une vue en perspective d'un aéronef 100 qui comprend un dispositif de routage 120. Le dispositif de routage 120 est configuré pour mettre en œuvre le procédé décrit en référence aux Figs 2A et 2B.

## Revendications

1. Un procédé de routage pour router un flux applicatif de données depuis un dispositif de routage dans un véhicule vers un dispositif destinataire, ledit dispositif de routage ayant à sa disposition une pluralité de moyens de communication, ledit procédé étant **caractérisé en ce que** ledit procédé comprend les étapes suivantes, mises en œuvre par ledit dispositif de routage :
- avant un déplacement dudit véhicule :
- obtenir (S100) des informations relatives audit déplacement, lesdites informations comprenant au moins un itinéraire prévu pour ledit déplacement et, pour chaque moyen de communication, des informations nécessaires à l'estimation d'au moins un paramètre représentatif de la performance du moyen de communication ;
- estimer (S110), en utilisant un procédé d'apprentissage automatique, le long de l'itinéraire prévu, pour chaque moyen de communication, ledit paramètre représentatif de la performance dudit moyen de communication à partir desdites informations obtenues ;
- définir (S 120) des règles de routage théoriques à partir du paramètre estimé représentatif de la performance du moyen de communication et de besoins applicatifs ;
- au cours du déplacement dudit véhicule :
- obtenir (S 130) des informations relatives audit déplacement, lesdites informations comprenant au moins des informations de position du véhicule à un instant t ;
- obtenir (S140), pour chaque moyen de communication, des informations déterminées à des instants antérieurs à l'instant t et nécessaires à l'estimation du paramètre représentatif de la performance à l'instant t du moyen de communication ;
- estimer (S150), en utilisant un procédé d'apprentissage automatique, pour chaque moyen de communication, ledit paramètre représentatif de la performance à l'instant t du moyen de communication à partir des informations obtenues au cours du déplacement ;
- comparer (S160), pour chaque moyen de communication, le paramètre représentatif de la performance du moyen de communication estimé à l'instant t avec sa valeur estimée avant le déplacement ;
- router (S 170) ledit flux applicatif de données en réponse à ladite comparaison.

2. Le procédé de routage selon la revendication 1, dans lequel, avant le déplacement du véhicule, lesdites informations nécessaires à l'estimation d'au moins un paramètre représentatif de la performance du moyen de communication comprennent des données cartographiques indiquant le niveau de couverture dudit moyen de communication.

3. Le procédé de routage selon l'une des revendications 1 ou 2, dans lequel router (S 170) ledit flux applicatif de données en réponse à ladite comparaison comprend :
- router le flux applicatif de données en utilisant lesdites règles de routage théoriques dans le cas où, pour tous les moyens de communication, tous les paramètres estimés représentatifs de la performance à l'instant t du moyen de communication sont sensiblement égaux à leurs valeurs respectives estimées avant déplacement ;
- sinon, définir de nouvelles règles de routage à partir des paramètres estimés représentatifs de la performance à l'instant t du moyen de communication et des besoins applicatifs et router le flux applicatif de données en utilisant lesdites nouvelles règles de routage.

4. Le procédé de routage selon l'une des revendications 1 à 3, dans lequel ledit au moins un paramètre représentatif de la performance dudit moyen de communication appartient à l'ensemble des paramètres comprenant un débit, une latence, un taux de perte de paquets, une gigue.

5. Le procédé de routage selon l'une des revendications 1 à 4, dans lequel le dispositif de routage est un dispositif de routage SD-WAN.

6. Dispositif de routage dans un véhicule configuré pour router un flux applicatif de données dudit véhicule vers un dispositif destinataire, ledit dispositif de routage ayant à sa disposition une pluralité de moyens de communication, ledit dispositif de routage étant **caractérisé en ce que** ledit dispositif de routage comprend au moins un processeur configuré pour :
- avant un déplacement dudit véhicule :
- obtenir (S100) des informations relatives audit déplacement, lesdites informations comprenant au moins un itinéraire prévu pour ledit déplacement et, pour chaque moyen de communication, des informations nécessaires à l'estimation d'au moins un paramètre représentatif de la performance du moyen de communication ;
- estimer (S110), en utilisant un procédé d'apprentissage automatique, le long de l'itinéraire prévu, pour chaque moyen de communication, au moins un paramètre représentatif de la performance dudit moyen de communication à partir desdites informations obtenues ;
- définir (S120) des règles de routage théoriques à partir du paramètre estimé représentatif de la performance du moyen de communication et de besoins applicatifs ;
- au cours du déplacement dudit véhicule :
- obtenir (S130) des informations relatives audit déplacement, lesdites informations comprenant au moins des informations de position du véhicule à un instant t ;
- obtenir (S140), pour chaque moyen de communication, des informations obtenues à des instants antérieurs à l'instant t et nécessaires à l'estimation d'au moins un paramètre représentatif de la performance à l'instant t du moyen de communication ;
- estimer (150), en utilisant un procédé d'apprentissage automatique, pour chaque moyen de communication, ledit paramètre représentatif de la performance du moyen de communication à l'instant t à partir des informations obtenues au cours du déplacement ;
- comparer (S160), pour chaque moyen de communication, le paramètre représentatif de la performance du moyen de communication estimé à l'instant t avec sa valeur estimée avant le déplacement ;
- router (S 170) ledit flux applicatif de données en réponse à ladite comparaison.

7. Dispositif de routage selon la revendication 6, dans lequel, avant le déplacement du véhicule, lesdites informations nécessaires à l'estimation d'au moins un paramètre représentatif de la performance du moyen de communication comprennent des données cartographiques indiquant le niveau de couverture dudit moyen de communication.

8. Dispositif de routage selon l'une des revendications 6 ou 7, dans lequel, pour router ledit flux applicatif de données en réponse à ladite comparaison, le processeur est configuré pour :
- router le flux applicatif de données en utilisant lesdites règles de routage théoriques dans le cas où, pour tous les moyens de communication, tous les paramètres estimés représentatifs de la performance à l'instant t du moyen de communication sont sensiblement égaux à leurs valeurs respectives estimées avant déplacement ;
- sinon, définir de nouvelles règles de routage à partir des paramètres estimés représentatifs de la performance à l'instant t du moyen de communication et des besoins applicatifs et router le flux applicatif de données en utilisant lesdites nouvelles règles de routage.

9. Dispositif de routage selon l'une des revendications 6 à 8, dans lequel ledit au moins un paramètre représentatif de la performance dudit moyen de communication appartient à l'ensemble des paramètres comprenant un débit, une latence, un taux de perte de paquets, une gigue.

10. Dispositif de routage selon l'une des revendications 6 à 9, dans lequel le dispositif de routage est un dispositif de routage SD-WAN.

11. Aéronef comprenant un dispositif de routage selon l'une des revendications 6 à 10.

12. Un produit programme d'ordinateur **caractérisé en ce que** ledit produit programme d'ordinateur comprend des instructions pour mettre en œuvre le procédé de routage selon l'une quelconque des revendications 1 à 5, lorsque ledit programme d'ordinateur est exécuté par un processeur.

13. Un support de stockage **caractérisé en ce que** ledit support de stockage stocke un programme d'ordinateur comprenant des instructions pour mettre en œuvre le procédé de routage selon l'une quelconque des revendications 1 à 5, lorsque ledit programme d'ordinateur est exécuté par un processeur.
